# EUROPEAN PATENT APPLICATION

(11) **EP 1 980 182 A1**
(43) Date of publication of application: **15.10.2008**
(21) Application number: 07105977.8
(22) Date of filing: 11.04.2007
(51) Int. Cl.: A47J 31/00, A47J 31/52

(54) **Beverage making setting method and a setting device thereof**

(71) Applicant: Klub Manufacturing Corp., Luju Shiang Taoyuan Hsien, Taiwan (CN)
(72) Inventor: Yanf, Daniel, Taoyuan Hsien (TW)
(74) Representative: Viering, Jentschura & Partner

(57) **Abstract**

The present invention relates to a setting method for making beverage and a setting device thereof. The setting method includes the following steps: (a) switching to a manual setup mode; (b) selecting a different mode by operating a setup unit; (c) selecting preset socking flow to set up a sub-mode, and outputting setup signals; (d) releasing a flow setup key to stop outputting setup signals; (e) pressing the flow setup key to stop; (f) repeating Steps (c) through (e) if multiple pre-socking is desired; (g) outputting setup signals while selecting a flow setup sub-mode; (h) releasing the flow setup key to stop outputting setup signals; (i) switching to an automatic making mode; and (j) reading and executing setup signals in a memory.

## Description

### BACKGROUND OF THE INVENTION

### (a) Field of the Invention

The present invention relates to a setting method for making beverage and a setting device thereof, and more particularly, to one that allows an operator to set soaking time and output water flow as desired while putting the settings in a memory for the beverage using natural materials including tea, coffee, floral tea and herbal medicine to release their unique flavors.

### (b) Description of the Prior Art

Some of those beverage makers generally available in the market as seen in a slot machine make coffee out of coffee powders while others make coffee out of ground coffee beans. The way for making coffee out of coffee powders is drastically different from that for making coffee from coffee grains with the former essentially having the powders to dissolve in hot water at proper temperature and the latter requires much higher temperature of hot water (even including steam) to seep through the ground coffee grains to extract coffee.

However, those beverage makers are usually preset with a given making program, and a fixed amount of water is set up in related to a specific raw material. Accordingly, a user has to make a beverage with a fixed flavor by compromising the existing built-in program. Even very few beverage makers claim that the flavor is adjustable, it at best adjust an accompanying raw material of beverage and fails to adjust or set the making flavor of a natural material of the primary beverage, e.g., tea leaves.

This inventor filed an application for an invention titled "Automatic Tea Maker" of No. 292994 as published in No. M292994 Taiwan Utility Patent Gazette discloses a control unit connected to a man-machine interface and multiple operation keys disposed on the man-machine interface; and operating the multiple keys controls the time for a water inlet device to stay and the amount of water delivered. However, the invention though teaches automatic tea making with hot water fails to fully disclose how to set, memorize, and automatic making since the flavor of tea is selected by operating a designated key.

Taste and flavor present by an edible available in the nature varies depending on place of production, cropping season, cropping and production techniques, and even the way of making. Conventional way of making a beverage using tea bag, ground coffee grains, floral tea, or herbal medicine to release unique flavor of the natural raw material involves manual control of the length of soaking time and the amount of water added; however, there is the absence of a method and a device of setting the making of a beverage.

### SUMMARY OF THE INVENTION

The primary purpose of the present invention is to provide a setting method for beverage making and a setting device thereof to allow an operator to set and memorize length of soaking time and amount of water to be outputted in solving the problems of automatic making beverage out of natural edibles.

To achieve the purpose, a setting method of the present invention includes the following steps:
(a) switching to a manual setup mode;
(b) operating a pre-soaking flow setup key and a flow setup key disposed on a setup unit, and selecting a pre-soaking flow setup sub-mode or a flow setup sub-mode;
(c) pressing the flow setup key to output setup signals and start to solve setup flow while selecting the pre-soaking flow setup sub-mode;
(d) releasing the flow setup key to stop outputting setup signals, solving water flow setting and storing it in a memory while starting to solve time lapse;
(e) pressing the flow setup key described in Step (d), having the time length solved as the length of the pre-soaking setup time and storing it in the memory;
(f) repeating Steps (c) through (e) if multiple pre-socking is desired;
(g) pressing the flow setup key to output setup signals while selecting the flow setup sub-mode, and starting to solve the setting of water flow;
(h) releasing the flow setup key to stop outputting setup signals, and solving the setting of flow to be stored in the memory;
(i) switching to an automatic making mode; and
(j) reading and executing setup signals in the memory.

A setting device for making beverage to execute the setting method of the present invention comprises an alternative switch to switch between an automatic making mode and a manual setup mode; a setup unit including a pre-soaking flow setup key to switch between a pre-soaking flow setup sub-mode and a flow setup sub-mode, and at least one flow setup key to control output of water supply and output setup signals for setting up amount of water supply; and a control unit including a micro-processor and a memory connected to each other with the memory to store output setup signals in the manual setup mode and the microprocessor to access to the output setup signals for controlling automatic making in the automatic making mode.

The setting device further comprises a water supply unit. The water supply unit is disposed with a water outlet valve subject to control by the control unit for automatically delivering water for the making of the beverage.

Accordingly, the present invention while being applicable in the making of natural beverage including tea leaves, ground coffee grains, flora tea, and herbal medicine to release their unit flavors allows setup in the making of the beverage according to preference of individual user by setting up length of soaking time and amount of water to be outputted.

### BRIEF DESCRIPTION OF THE DRAWINGS

Fig. 1 is a block chart of a setting device for making a beverage of the present invention.
Fig. 2 is a perspective view with a sectional view of a cutaway of the setting device for making a beverage of the present invention.
Fig. 3 is a flow chart of a beverage making method of the present invention.

### DETAILED DESCRIPTION OF THE PREFERRED EMBODIMENTS

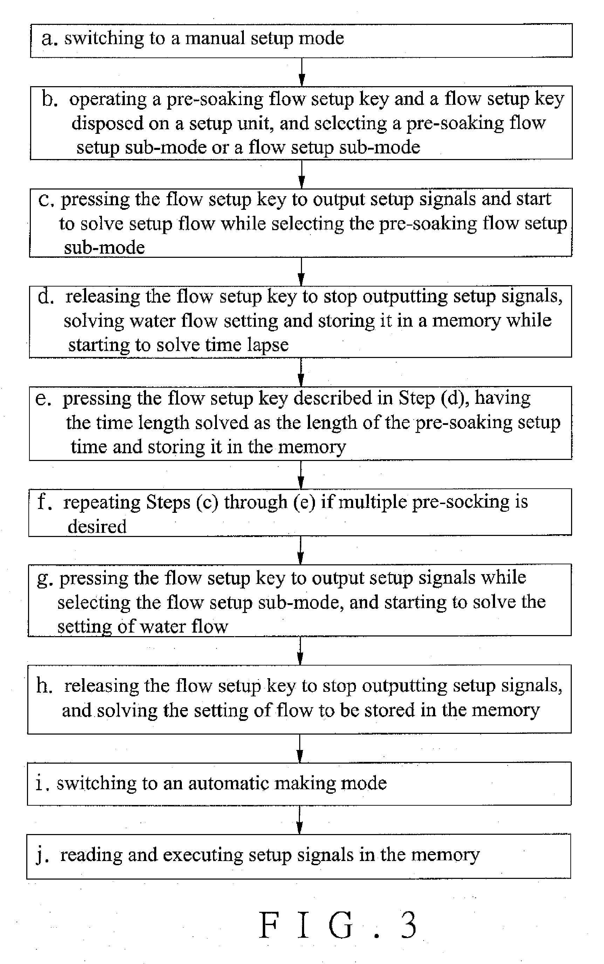

Referring to Fig. 3, a beverage-making method of a preferred embodiment of the present invention includes the following steps:
a. switching to a manual setup mode;
b. operating a pre-soaking flow setup key and a flow setup key disposed on a setup unit, and selecting a pre-soaking flow setup sub-mode or a flow setup sub-mode;
c. pressing the flow setup key to output setup signals and start to solve setup flow while selecting the pre-soaking flow setup sub-mode;
d. releasing the flow setup key to stop outputting setup signals, solving water flow setting and storing it in a memory while starting to solve time lapse;
e. pressing the flow setup key described in Step (d), having the time length solved as the length of the pre-soaking setup time and storing it in the memory;
f. repeating Steps (c) through (e) if multiple pre-socking is desired;
g. pressing the flow setup key to output setup signals while selecting the flow setup sub-mode, and starting to solve the setting of water flow;
h. releasing the flow setup key to stop outputting setup signals, and solving the setting of flow to be stored in the memory;
i. switching to an automatic making mode; and
j. reading and executing setup signals in the memory.

The setup signals outputted from a control unit are supplied by pressing On/Off operation on both the pre-soaking flow setup key and the flow setup key on the setup unit.

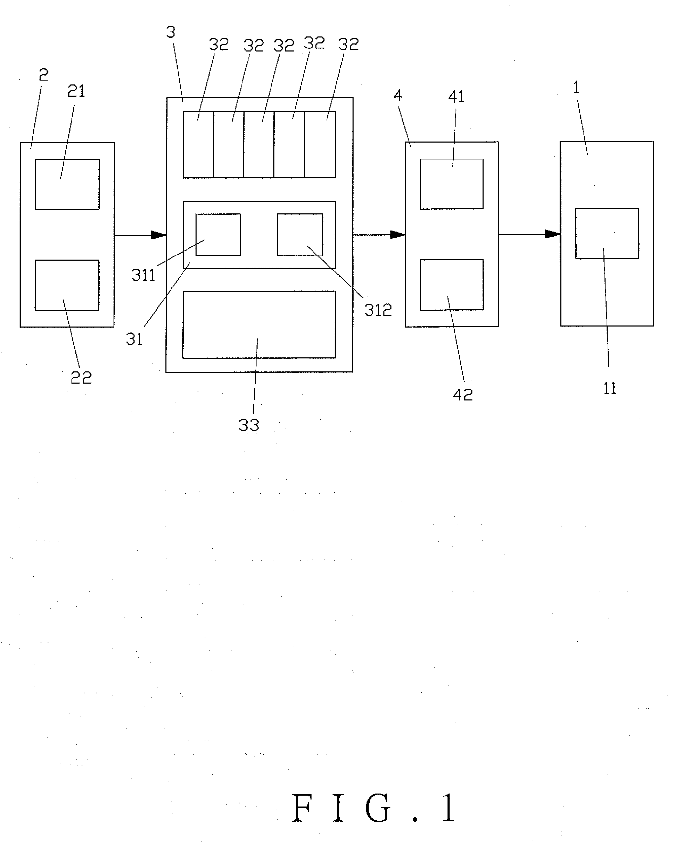

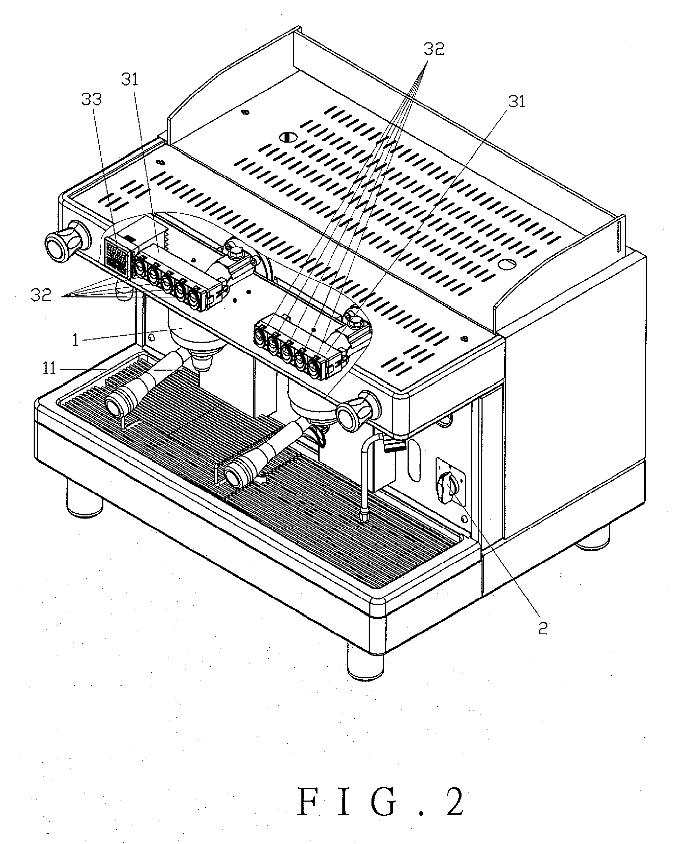

Now referring to Figs. 1 and 2, a setting device for making a beverage by following the method of the present invention includes a water supply unit (1), an alternative switch (2), a setup unit (3), and a control unit (4).

The water supply unit (1) is disposed with a water outlet valve (11).

The alternative switch (2) is to switch between an automatic making mode (21) and a manual setup mode (22).

The setup unit (3) includes a pre-soaking flow setup key (31) and at least one flow setup key (32). The pre-soaking flow setup key (31) is to switch between a pre-soaking flow setup sub-mode (311) and a flow setup sub-mode (312). The flow setup key (32) is to control output of water supply and output setup signals for setting up amount of water supply. The setup unit (3) further comprises a display panel (33) to display setup status to facilitate viewing the status by a user.

The control unit (4) includes a micro-processor (41) and a memory (42) connected to each other with the memory (42) to store setup signals outputted from the setup unit (3) in the manual setup mode (22) and the microprocessor (41) to access to the output setup signals for controlling the water outlet valve (11) of the water supply unit (1) to execute automatic making of the beverage in the automatic making mode (21).

The user may monitor the setup status for operation from the display panel (33). To set up the beverage making device, the user first presses the alternative switch (2) to switch to the manual setup mode; presses the pre-soaking setup key (31) of the setup unit (3) to select the pre-soaking flow setup sub-mode (311); presses the flow setup key (32) to output setup signals to the microprocessor (41) and the memory (42) of the control unit (4) for solving setup water flow amount; releases the flow setup key (32) to stop outputting the setup signals for solving the water flow setting and then storing the setting in the memory (42); and starts to solve time lapse before pressing the flow setup key (32) to end up solving the time lapse and have the time lapse solved as the pre-soaking setup time to be stored in the memory (42). The user may repeat the setup as described above if multiple pre-soaking times are desired.

When pressing the flow setup sub-mode (312) of the pre-soaking flow setup key (31) to select the flow setup sub-mode, then pressing the flow setup key (32) to output setup signals, both the microprocessor (41) and the memory (42) of the control unit (4) start to solve the setup water flow. Once the flow setup key (32) is released to stop outputting setup signals to solve and memorize the water flow setting, the alternative switch (2) is pressed to switch to the automatic making mode for both the microprocessor (41) and the memory (42) to read and execute those setup signals as memorized for the water outlet valve (11) of the water supply unit (1) to automatically supply water for making the beverage.

Accordingly, the present invention while being applicable in the making of natural beverage including tea leaves, ground coffee grains, flora tea, and herbal medicine to release their unit flavors allows setup in the making of the beverage according to preference of individual user by setting up length of soaking time and amount of water to be outputted.

## Claims

1. A setting method for making beverage including the following steps:
a. switching to a manual setup mode;
b. operating a pre-soaking flow setup key and a flow setup key disposed on a setup unit, and selecting a pre-soaking flow setup sub-mode or a flow setup sub-mode;
c. pressing the flow setup key to output setup signals and start to solve setup flow while selecting the pre-soaking flow setup sub-mode;
d. releasing the flow setup key to stop outputting setup signals, solving water flow setting and storing it in a memory while starting to solve time lapse;
e. pressing the flow setup key described in Step (d), having the time length solved as the length of the pre-soaking setup time and storing it in the memory;
f. repeating Steps (c) through (e) if multiple pre-socking is desired;
g. pressing the flow setup key to output setup signals while selecting the flow setup sub-mode, and starting to solve the setting of water flow;
h. releasing the flow setup key to stop outputting setup signals, solving and storing the setting of flow in the memory;
i. switching to an automatic making mode; and
j. reading and executing setup signals in the memory.

2. A setting device for making beverage to execute the setting method for making beverage as claimed in Claim 1, comprising:
an alternative switch (2) to switch between an automatic making mode (21) and a manual setup mode (22);
a setup unit (3) comprising a pre-soaking flow setup key (31) to switch between a pre-soaking flow setup sub-mode (311) and a flow setup sub-mode (312), and at least one flow setup key (32) to control output of water supply and output setup signals for setting up amount of water supply; and
a control unit (4) comprising a micro-processor (41) and a memory (42) connected to each other with the memory (42) to store setup signals outputted from the setup unit (3) in the manual setup mode (22) and the microprocessor (41) to access to the output setup signals for controlling automatic making of the beverage in the automatic making mode (21).

3. The setting device for making beverage as claimed in Claim 2 further comprising a water supply unit (1), the water supply unit (1) being disposed with a water outlet valve (11) subject to control by the control unit (4) for automatically supplying water in making beverage.
